Europäisches Patentamt

European Patent Office

Office européen des brevets

(11) Veröffentlichungsnummer: **0 324 872**

**A1**

(12) ## EUROPÄISCHE PATENTANMELDUNG

(21) Anmeldenummer: 88100665.4

(22) Anmeldetag: 19.01.88

(51) Int. Cl.⁴: **G01M 17/02 , G01B 9/021**

(43) Veröffentlichungstag der Anmeldung:
26.07.89 Patentblatt 89/30

(84) Benannte Vertragsstaaten:
**FR GB IT**

(71) Anmelder: **Albert Reiff KG**
**Tübinger Strasse 2 - 6**
**D-7410 Reutlingen(DE)**

(72) Erfinder: **Steinbichler, Hans, Dr.**
**Rosenheimer Strasse 43**
**D-8207 Endorf(DE)**
Erfinder: **Sperb, Michael, Dr.**
**Schellingstrasse 39**
**D-7410 Reutlingen(DE)**
Erfinder: **Vocke, Jürgen**
**Frankfurter Strasse 10**
**D-7410 Reutlingen(DE)**

(74) Vertreter: **Möbus, Rudolf, Dipl.-Ing.**
**Hindenburgstrasse 65**
**D-7410 Reutlingen(DE)**

(54) **Verfahren und Einrichtung zur zerstörungsfreien Prüfung von Fahrzeugreifen.**

(57) Bei dem Verfahren zur zerstörungsfreien Prüfung von Fahrzeugreifen mittels der holografischen Interferometrie oder Shearographie wird die auf Verformungen untersuchte Reifenoberfläche (11.1) kurzzeitig mittels eines energiereichen Laserimpulses beleuchtet und werden die erzielten Interferogramme oder Shearogramme zeitsparend mittels einer Thermoplastkamera festgehalten. Das wirtschaftliche und rasche Prüfverfahren läßt sich mittels einer Einrichtung durchführen, auf welcher die zu prüfenden Reifen (11) einzeln schrittweise entlang einer Reifen-Transportstrecke mit verschiedenen Behandlungsstationen (I - V), einschließlich einem mit der Impulslasereinrichtung versehenen Unterdruckbehälter (13), bewegt werden.

Fig. 1

## Verfahren und Einrichtung zur zerstörungsfreien Prüfung von Fahrzeugreifen

Die Erfindung betrifft ein Verfahren und eine Einrichtung zur zerstörungsfreien Prüfung von Fahrzeugreifen mittels der holografischen Interferometrie, mit einem Laser zum Beleuchten des in einer Unterdruckkammer angeordneten, unterschiedlichen Drücken aussetzbaren und offengehaltenen Fahrzeugreifens.

Es ist bereits bekannt, Fahrzeugreifen mittels der holografischen Interferometrie bei unterschiedlichen Druckzuständen dahingehend zu prüfen, ob eine einwandfreie Verbindung zwischen der Karkasse des Reifens und dem seine Lauffläche bildenden Auflagematerial besteht oder Schwachstellen im Auflagematerial vorhanden sind. Diese bekannten Prüfverfahren, die in erster Linie zur Überprüfung neuer Reifen in unmontiertem oder in auf Radfelgen montiertem Zustand gedacht sind, haben den Nachteil, daß die Prüf zeit relativ hoch ist und während dieser Zeit der untersuchte Reifen über die ganze Zeit, welche eine Aufzeichnungsvorrichtung zur Aufnahme der Interferogramme benötigt, absolut ruhiggehalten werden muß. Es ist ein gesonderter, gegen Schwingungen gesicherter Prüfraum erforderlich. Es ergibt sich zwangsläufig eine relativ hohe Prüffehlerquote, weil ein unter Druck stehender Reifen als elastisch verformbares Gebilde Ausgleichsbewegungen auch in festgespanntem Zustand ausführen kann. Für eine Serienprüfung in einer laufenden Reifenproduktion, insbesondere aber in einer laufenden Überprüfung von Altreifen auf ihre Tauglichkeit zur Runderneuerung, sind die bekannten Verfahren unwirtschaftlich und mit einer zu hohen Fehlerquote behaftet.

Der Erfindung liegt die Aufgabe zugrunde, ein Verfahren und eine Einrichtung der eingangs genannten Art so zu gestalten, daß mit ihnen eine wirtschaftliche und rasche Serienprüfung von Fahrzeugreifen möglich ist.

Die gestellte Aufgabe wird mit einem Verfahren der eingangs genannten Art erfindungsgemäß dadurch gelöst, daß die Reifenoberfläche bei verschiedener Druckbelastung jeweils nur kurzzeitig mittels eines energiereichen Laserimpulses beleuchtet wird, also ein Impulslaser mit kurzer Abtastzeit eingesetzt wird, so daß Kriechbewegungen des zu prüfenden Reifens die Interferogramme nicht beeinträchtigen können. Der genannte Vorteil kann noch dadurch erhöht werden, daß die Interferogramme mittels einer Thermoplastkamera festgehalten werden, die wegen des energiereichen Laserimpulses keine lange Belichtungszeit benötigt und ein sofort optisch auswertbares Hologramm liefert. Nach dem kurzen Prüfvorgang kann also sofort eine Entscheidung über den geprüften Fahrzeugreifen getroffen werden, so lange er sich noch in der Prüfeinrichtung befindet. Die überprüften Fahrzeugreifen müssen nicht in eine Warteposition bewegt werden, bis ein hochempfindlicher Film entwickelt ist und eine Auswertung des Hologramms und damit eine Entscheidung über die Qualität des geprüften Fahrzeugreifens erlaubt.

Das Verfahren gemäß der Erfindung kann vorteilhafterweise mittels einer Einrichtung durchgeführt werden, die einen an einen Unterdruckerzeuger anschließbaren Unterdruckbehälter mit einer Vorrichtung zur Einzeleinbringung der zu prüfenden Fahrzeugreifen aufweist, wobei im Unterdruckbehälter Einrichtungen zur Laserstrahlführung und eine Aufzeichnungsvorrichtung für die erzielten Interferogramme angeordnet sind und die dadurch gekennzeichnet ist, daß am oder im Unterdruckbehälter ein Impulslaser und als Aufzeichnungsvorrichtung eine Thermoplastkamera angeordnet sind und der Unterdruckbehälter eine von mehreren, durch eine schrittweise bewegte endlose Reifen-Transportstrecke miteinander verbundenen Behandlungsstationen ist, welche die zu prüfenden Fahrzeugreifen mittels Spreizhaltern offengehalten durchlaufen.

Die erfindungsgemäß ausgebildete Einrichtung erlaubt also eine voll- oder halbautomatische Fahrzeugreifenprüfung innerhalb einer Förderstrecke, auf welcher die Fahrzeugreifen nacheinander schrittweise auf einer Förderstrecke ohne Warteschleifen die Prüfstation durchlaufen, wobei der Durchlauftakt durch das kurze Prüfverfahren, einschließlich der notwendigen Zeiten zum Einbringen und Ausbringen der Reifen in den bzw. aus dem Unterdruckbehälter, bestimmt wird. Es ergibt sich ein wirtschaftliches Prüfungsverfahren mit äußerst geringer ·Fehlerquote und mit dem zusätzlichen Vorteil, daß sowohl der Energieverbrauch der Prüfeinrichtung als auch der Wartungsaufwand kleiner ist als bei bisher bekannten vergleichbaren holografischen Prüfeinrichtungen mit Dauerstrichlasern. Ein gesonderter Prüfraum kann entfallen, da die Einrichtung unempfindlich gegen Schwingungen und andere Umwelteinflüsse ist.

Zweckmäßig kann die Reifen-Transportstrecke aus beweglichen Plattformen zur Einzelaufnahme der Fahrzeugreifen zusammengesetzt sein. Die Prüfergebnisse lassen sich noch dadurch verbessern, daß in der Reifen-Transportstrecke vor dem Unterdruckbehälter in einer Behandlungsstation eine Sprüheinrichtung zum Bilden einer Reflexionsschicht auf der Fahrzeugreifen-Innenseite angeordnet ist. Das Offenhalten der nicht auf eine Fahrzeugfelge aufgezogenen Fahrzeugreifen während des Prüfvorganges kann entweder durch gesonderte Spreizhalter erfolgen, die mittels einer Greif-und Spreizvorrichtung an einer ersten Behandlungsstation in die einzelnen Fahrzeugreifen eingesetzt und an einer letzten Behandlungsstation der Reifen-Transportstrecke wieder aus den Reifen entfernt werden, oder aber mittels jeder Plattform eigener, mit einer Antriebseinrichtung verbundener Spreizhalter, die nach dem Auflegen eines Fahrzeugreifens auf der Plattform und vor dem Abnehmen des Fahrzeugreifens von der Plattform betätigt werden.

Die Einrichtung gemäß der Erfindung läßt sich auch raumsparend ausbilden, indem die endlose Reifen-Transportstrecke unter dem Unterdruckbehälter hindurch und oben über den Unterdruckbehälter hinweg zurückgeführt wird, wobei die Einzelbeschickung des Unterdruckbehälters mit den offengehaltenen Fahrzeugreifen über eine obere verschließbare Öffnung des Unterdruckbehälters erfolgt.

Zur Laserstrahlführung können im Unterdruckbehälter vorteilhafterweise Lichtleitkabel vorgesehen sein, wobei auch vorgesehen sein kann, die Laserimpulse aus einem im Innern der Fahrzeugreifen ringförmig geführten Lichtleiter auf die Reifeninnenseite auszuleiten. Auch können anstelle von holografischen Interferogrammen Shearogramme gebildet werden. Die von den Aufzeichnungsvorrichtungen gelieferten Interferogramme können entweder direkt im Aufzeichnungsgerät oder durch Entnahme der Aufzeichnungsträger aus dem Aufzeichnungsgerät ausgewertet werden. Sie können aber auch mittels einer Videokamera auf einen Auswertebildschirm übertragen werden.

Nachfolgend wird ein Ausführungsbeispiel einer erfindungsgemäß ausgebildeten Einrichtung zur serienmäßigen Durchführung einer zerstörungsfreien Prüfung von Fahrzeugreifen anhand der beiliegenden Zeichnung naher erläutert.

Im einzelnen zeigen:

Fig. 1 eine schematische Gesamtdarstellung der Reifen-Transportstrecke mit ihren verschiedenen Behandlungsstationen;

Fig. 2 eine Teilansicht der Reifen-Transportstrecke mit drei Behandlungsstationen I, II und III;

Fig. 3a - 3d eine an den Behandlungsstationen I - III einsetzbare Greif- und Spreizvorrichtung in unterschiedlichen Betriebsstellungen und Ansichten;

Fig. 4a eine Einzelansicht eines gesonderten Spreizhalters für die Fahrzeugreifen;

Fig. 4b den in Fig. 4a dargestellten Spreizhalter in Seitenansicht, eingesetzt in einen Fahrzeugreifen;

Fig. 5 eine Draufsicht auf eine besonders ausgebildete Plattform der Reifen-Transportstrecke;

Fig. 6 einen Querschnitt durch die Plattform entlang der Linie VI - VI in Fig. 5 mit aufgelegtem Fahrzeugreifen;

Fig. 7 einen schematischen Längsschnitt durch den Unterdruckbehälter der Einrichtung mit der holografischen Prüfeinrichtung;

Fig. 8 eine der Fig. 2 entsprechende Ansicht einer Einrichtung mit einer anderen Ausführungsform der Greif- und Spreizvorrichtung;

Fig. 9 eine Seitenansicht der anderen Greif- und Spreizvorrichtung;

Fig. 10 einen Querschnitt durch die Greif- und Spreizvorrichtung entlang der Linie X - X in Fig. 9;

Fig. 11 einen Schnitt durch einen Elektromagnethalter der Greif- und Spreizvorrichtung mit anliegendem Spreizhalter;

Fig. 11a eine stirnseitige Ansicht des aus Fig. 11 ersichtlichen Spreizhalters;

Fig. 12 eine Vorderansicht des Elektromagnethalters in Richtung des Pfeiles XII in Fig. 10.

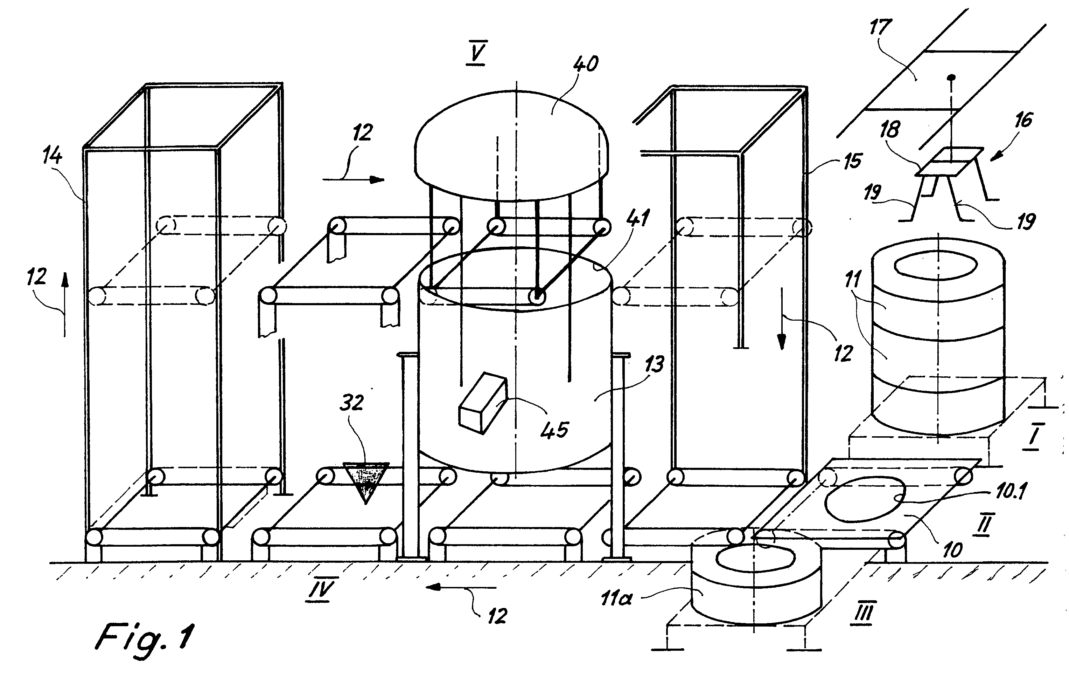

Fig. 1 zeigt schematisch den Gesamtaufbau einer Einrichtung zur serienmäßigen zerstörungsfreien Prüfung von Fahrzeugreifen. Die Einrichtung weist verschiedene Behandlungsstationen I, II, III, IV und V auf, die durch eine endlose Reifen-Transportstrecke, auf welcher mit einer großen zentralen Öffnung 10.1 versehene Plattformen 10 zur Aufnahme einzelner und zu prüfender Reifen 11 intermittierend in Richtung der eingetragenen Pfeile 12 bewegt werden. Die Reifen-Transportstrecke führt unter einem die Behandlungsstation V bildenden Unterdruckbehälter 13 hindurch, über einen ersten Aufzug 14 nach oben, über den Unterdruckbehälter 13 hinweg zurück und über einen zweiten Aufzug 15 wieder nach unten, wo an der Behandlungsstation II die Beschickung der endlosen Reifen-Transportstrecke mit den reifenbesetzten Plattformen 10 und deren Entnahme erfolgt. Auf der Reifen-Transportstrecke erfolgt eine schrittweise Weiterbewegung der Plattformen 10 mittels geeigneter Antriebsmittel, die hier nicht näher interessieren und daher auch nicht dargestellt sind.

An der Behandlungsstation I sind zu kontrollierende Fahrzeugreifen, hier für eine Runderneuerung vorgesehene gebrauchte Fahrzeugreifen, gestapelt und können mittels einer Greif- und Spreizvorrichtung 16, die an einem verfahrbaren Wagen 17 vertikalverstellbar angehängt ist, erfaßt, geöffnet und einzeln in die Ein- und Ausgabeposition II gebracht werden können. Mit der gleichen Greif- und Spreizvorrichtung können die geprüften Reifen von den an der Behandlungsstation II der Förderstrecke entnommenen Plattformen 10 in eine Weitergabestation III umgesetzt werden. Die geprüften Fahrzeugreifen sind mit der Bezugsziffer 11a bezeichnet.

Beim dargestellten Ausführungsbeispiel bildet die Behandlungsstation II sowohl die Eingabestation als auch eine Ausgabestation für die Fahrzeugreifen 11, 11a. Es können hier auch gesonderte Eingabe- und Ausgabestationen mit eigener Greif- und Spreizvorrichtung 16 vorgesehen sein.

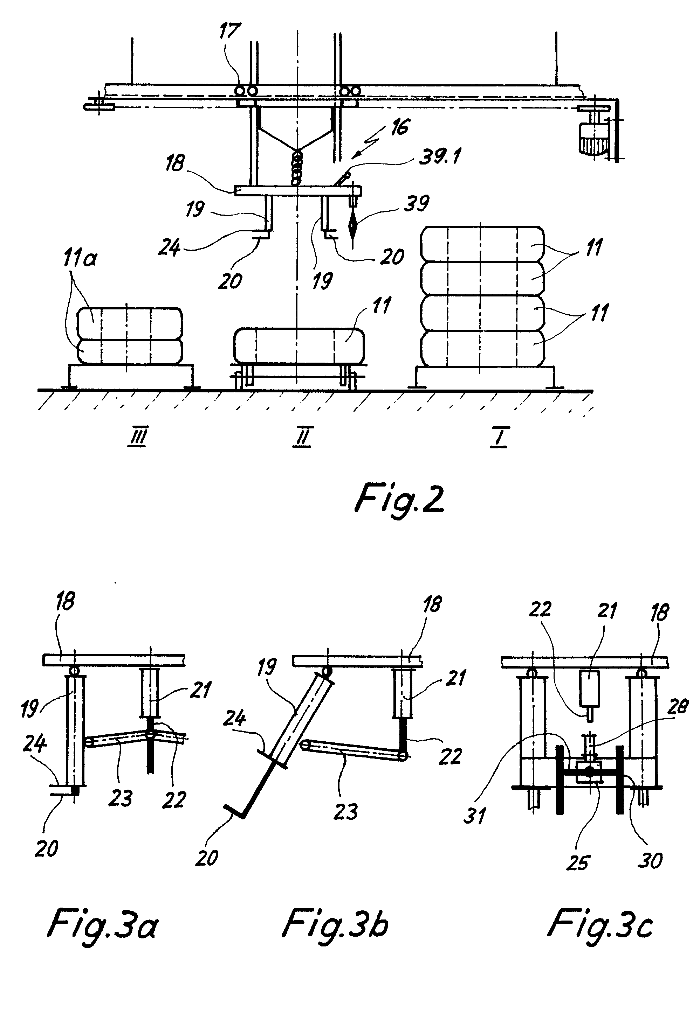

Wie Fig. 2 und die Fig. 3a - 3d erkennen lassen, besteht die vertikalverstellbare Greif- und Spreizvorrichtung 16 aus einem Rahmen 18, an welchem ein mit einem Endschalter 39.1 zusammenwirkender Tastfühler 39 zum Ertasten eines Reifens gelagert und vier erste Pneumatikzylinder 19 angelenkt sind, deren Kolbenstangen jeweils mit einer Spannklaue 20 verbunden sind, die gegenüber einer am Zylinder 19 befestigter Halteklaue 24 verstellbar ist. Ein fünfter, aus den Fig. 3a und 3b ersichtlicher Pneumatikzylinder 21 ist am Rahmen 18 zentral befestigt, und seine Kolbenstange 22 ist über Lenker 23 mit allen vier ersten Pneumatikzylindern 19 so gekoppelt, daß beim Ausfahren der Kolbenstange 22 gemäß Fig. 3b ein Auswärtsschwenken aller vier Pneumatikzylinder 19 erzielt wird.

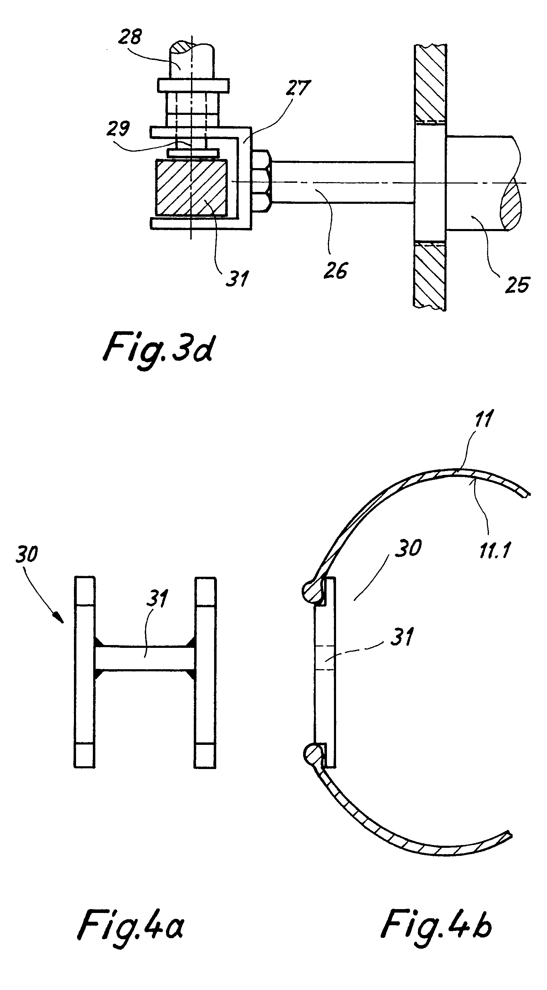

Am äußersten Ende der Kolbenstange 22 des Zentralzylinders 21 sind zwei nach entgegengesetzten Seiten gerichtete Querzylinder 25 befestigt, von denen jeweils einer aus den Fig. 3c und 3d ersichtlich ist und deren Kolbenstange 26 in einer Gabel 27 endet, auf welcher jeweils ein Haltezylinder 28 befestigt ist, dessen Kolbenstange in einem durch eine Öffnung der Gabel 27 ins Gabelinnere hineinragenden Druckstempel 29 endet (Fig. 3d). Mittels des Druckstempels 29 werden im einzelnen aus Fig. 4a ersichtliche, H-förmige Spreizhalter 30 an ihrem Mittelsteg 31 erfaßt. Die Spreizhalter 30 werden nach dem mittels der Spreizklauen 20 der ersten Zylinder 19 der Vorrichtung 16 erfolgten Öffnen der Fahrzeugreifen mittels der Querzylinder 25 an zwei einander gegenüberliegenden Umfangsstellen in die Reifen 11 gemäß Fig. 4b eingesetzt. Nach dem Einsetzen werden die Spreizhalter 30 durch Zurückziehen der Druckstempel 29 der Haltezylinder 28 freigegeben. Nach dem Prüfen der Reifen werden im umgekehrten Verfahrensgang dann die Spreizhalter 30 durch die Druckstempel 29 erfaßt und aus dem fertig geprüften Reifen 11a wieder entfernt, um sie in einen noch zu prüfenden Reifen an der Behandlungsstation I oder II einzusetzen. Anstelle pneumatischer Antriebsvorrichtungen können hier auch hydraulische oder elektrische Vorrichtungen Verwendung finden.

In Fig. 1 ist in dem unteren Bereich der endlosen Reifen-Transportstrecke eine Behandlungsstation IV bezeichnet, an welcher lediglich ein Sprühkegel 32 angedeutet ist. An dieser Behandlungsstation wird ein Farbsprühkegel oder eine umlaufende Farbsprühpistole in die Öffnungsebene des auf einer Plattform 10 angeordneten Reifens 11 eingebracht und damit eine Laserstrahl-Reflexionsschicht auf die Innenwandung 11.1 (Fig. 4b) aufgebracht.

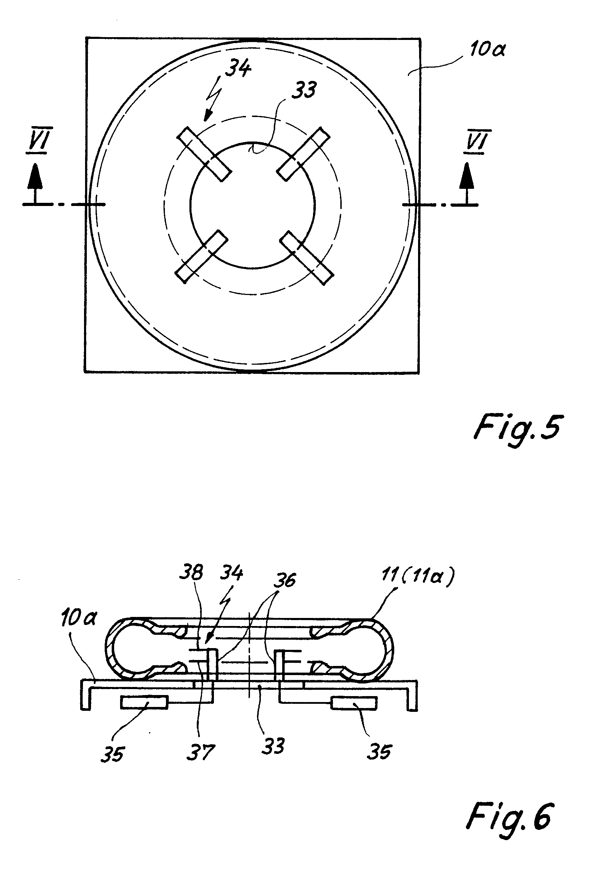

Die Fig. 5 und 6 zeigen eine abgewandelte Ausführungsform einer Plattform 10a mit ihrer zentralen Öffnung 33. Jede Plattform ist mit vier gleichmäßig über den Umfang ihrer zentralen Öffnung 33 verteilt angeordneten Spreizvorrichtungen 34 versehen. Jede Spreizvorrichtung besteht aus einem ersten Druckluftzylinder 35, der auf der Unterseite der Plattform 10a befestigt ist und der am Ende seiner Kolbenstange einen senkrecht dazu und vertikal gerichteten zweiten Druckluftzylinder 36 trägt, an dem eine Halteklaue 37 befestigt ist. Die Kolbenstange des Druckluftzylinders 36 trägt eine Spreizklaue 38. Mit dem Druckluftzylinder 35 der Spreizvorrichtung 34 wird der Spreizzylinder 36 in die Öffnung des auf die Plattform 10a aufgelegten Reifens 11 eingeschoben. Anschließend wird durch Ausfahren der Spreizklaue 38 die Öffnung des Reifens 11 zwischen der Halteklaue 37 und der Spreizklaue 38 aufgespannt und der Reifen 11 während seines Transportes auf der Reifen-Transportstrecke in dieser Offenstellung gehalten.

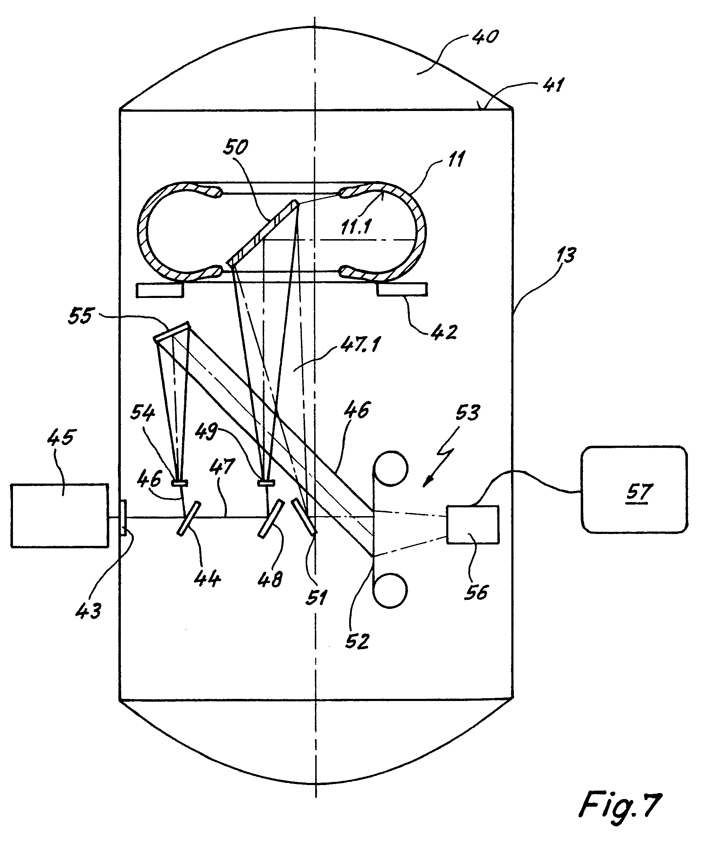

Fig. 7 zeigt schematisch das Innere des kreiszylindrischen Unterdruckbehälters 13, dessen Deckel 40 gemäß Fig. 1 abhebbar ist, so daß durch die obere Behälteröffnung 41 ein zu prüfender und aufgespannter Reifen zusammen mit einer Plattform 10, 10a (oder abgehoben von der Plattform und auf einem gesonderten Tragring 42 im Behälter 13 ruhend) eingebracht werden kann. Vor einem Fenster 43 der Behälterwandung ist außen ein Impulslaser 45 befestigt. Sein Strahlengang führt über einen Strahlteiler 44, an welchem jeder Laserimpuls in einen abgelenkten Referenzimpuls 46 und einen durchgehenden Objektimpuls 47 aufgeteilt wird. Der Objektimpuls wird an einem in der Mitte des Unterdruckbehälters 13 angeordneten Spiegel 48 abgelenkt und durch eine Linse 49 aufgeweitet auf eine im Zentrum des eingebrachten Reifens 11 angeordnete Spiegelanordnung 50 geworfen, welche die Beleuchtung der mit einer Reflexionsschicht bezogenen Innenseite 11.1 des Reifens bewirkt. Der reflektierte Objektimpuls 47.1 wird über einen dem Spiegel 48 benachbarten Spiegel 51 auf den fotothermoplastischen Film 52 einer Thermoplastkamera 53 geleitet, auf welche auch der Referenzimpuls 46 gelangt, nachdem er durch eine Linse 54 aufgeweitet und an einem Spiegel 55 reflektiert worden ist. Der Film 52 kann mittels einer verschwenkbaren, auf einzelne Filmbereiche einstellbaren und auf unterschiedliche Brennweiten einstellbaren Videokamera ganz oder teilweise (vergrößert) auf einem außerhalb des Unterdruckbehälters 13 befindlichen Bildschirm 57 betrachtet werden.

Referenzimpuls und Objektimpuls des Impulslasers 45 können hinter dem Strahlteiler 44 auch über Lichtleiter in Richtung auf den Thermoplastfilm 52 bzw. zur Spiegelanordnung 50 geleitet werden. Auch die Spiegelanordnung 50 könnte durch einen in die Öffnung des Reifens 11 eingebrachten, nicht dargestellten Lichtleiterring ganz oder teilweise ersetzt werden. Anstelle holografischer Interferogramme können auch Shearogramme angefertigt werden.

Der Reifen 11 wird in bekannter Weise im Unterdruckbehälter 13 zunächst Unterdruck ausgesetzt. Anschließend wird der Unterdruck abgebaut. Die zu entdeckenden Fehler sind Lufteinschlüsse an den Verbindungstellen der Reifenkarkasse mit dem Auflagematerial des Reifens. Bei einer Druckabsenkung dehnen sich eingeschlossene Luftblasen aus und führen dadurch zu einer Oberflächenverformung der Innenseite 11.1 des Fahrzeugreifens 11, die mit der holografischen Interferometrie feststellbar ist.

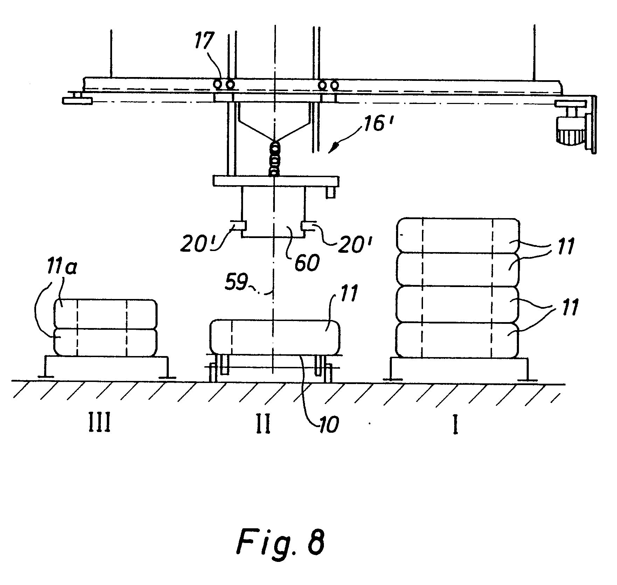

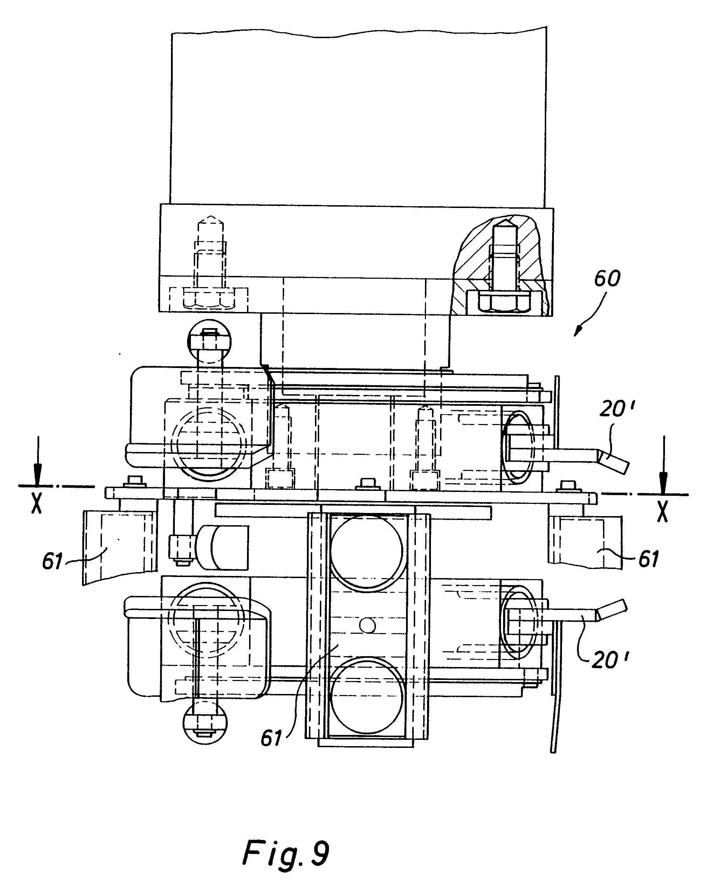

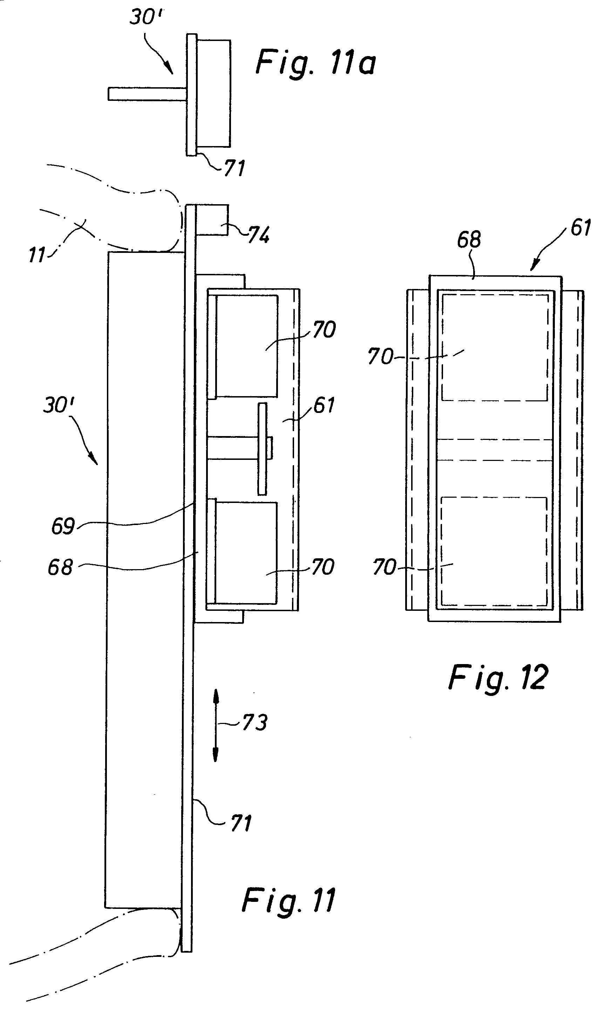

Fig. 8 zeigt eine Behandlungsstation 11 mit einer anderen Ausführungsform einer Greif- und Spreizvorrichtung 16′, die im einzelnen anhand der Fig. 9 - 12 erläutert wird. Der Kopf 60 der Greif- und Spreizvorrichtung 16′ weist gemäß Fig. 9 neben mehreren gleichmäßig über seinen Umfang verteilten und mittels nicht näher dargestellter Pneumatikzylinder bewegbarer Spannklauen 20′ elektromagnetische Halter 61 für aus Fig. 11 und 11a ersichtliche Spreizhalter 30′ auf. Die elektromagnetischen Halter 61 sind wie die Spannklauen 20′ am Kopf 60 der Greif- und Spreizvorrichtung nach außen verstellbar, so daß nach dem Einbringen des Kopfes 60 in das Zentrum des aufzuspannenden und zu erfassenden Reifens 11 (Fig. 8) die Spreizhalter 30′ in die durch die Spannklauen 20′ aufgespannte Öffnung des Fahrzeugreifens 11 eingesetzt werden können, wie dies aus Fig. 11 ersichtlich ist. Die elektromagnetischen Halter 61 sind jeweils neben einem Spannklauenpaar so angeordnet, daß sie sich in ihrer Verstellbewegung nicht gegenseitig behindern können.

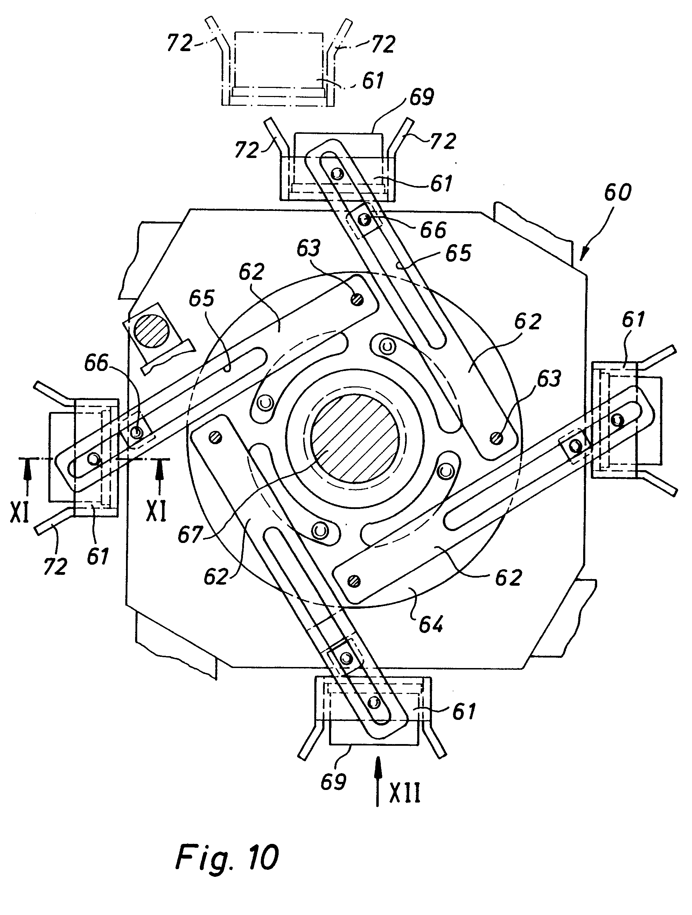

Der Verstellmechanismus für vier im Kopf 60 der Greif- und Spreizvorrichtung 16′ angeordnete elektromagnetische Halter 61 ist aus Fig. 10 ersichtlich. Alle vier elektromagnetischen Halter 61 sind jeweils am freien Ende eines Lenkers 62 befestigt, der mit seinem anderen Ende über einen Gelenkbolzen 63 an einer Schaltscheibe 64 verankert ist. Jeder Lenker 62 ist mit einem Längsschlitz 65 versehen, in welchen ein am Kopf 60 befestigter Führungsstift 66 ragt. Die Schaltscheibe 64 ist auf einer zentralen Stellwelle 67 befestigt, welcher mittels eines nicht dargestellten und im Kopf 60 untergebrachten Pneumatikzylinders eine Teildrehung in beiden Richtungen erteilt werden kann. Fig. 10 zeigt die elektromagnetischen Halter 61 in ihrer Ausgangsstellung. Der obere Halter 61 ist zusätzlich mit strichpunktierten Linien in seiner Spreizhalter-Einsetzstellung dargestellt.

Wie die Fig. 11 und 12 zeigen, weisen die elektromagnetischen Halter eine durch eine magnetisierbare Platte 68 gebildete Haltefläche 69 auf. Die Magnetisierung der Platte 68 wird mittels zweier hinter ihr angeordneter Elektromagnete 70 bewirkt. Die elektromagnetischen Halter 61 sind so angeordnet, daß ihre Haltefläche 69 parallel zu der in Fig. 8 bezeichneten Längsachse 59 des Kopfes 60 und des zu erfassenden Fahrzeugreifens 11 verläuft. Gegen die glatte Haltefläche 69 lassen sich die einen T-förmigen Querschnitt aufweisenden Spreizhalter 30′ mit einer ebenfalls glatten Anlagefläche 71 anlegen. Seitliche Führungswandungen 72 erleichtern das Anlegen der Spreizhalter 30′. Die Ausbildung der elektromagnetischen Halter 61 und der ihnen zugeordneten Spreizhalter 30′ erlaubt es den Spreizhaltern 30′, daß sie sich bei unerregten oder nur schwach erregten Elektromagneten 70 in Richtung des in Fig. 11 eingezeichneten Doppelpfeiles 73 mit ihrer Anlagefläche 71 auf der Haltefläche 69 des elektromagnetischen Halters 61 verschieben können. Ein solches Verschieben tritt ein, wenn nach dem Einsetzen der Spreizhalter 30′ die Spannklauen 20′ der Greif- und Spreizvorrichtung gelockert werden und der Fahrzeugreifen 11 wieder teilweise entspannt wird. Um ein vollständiges Abschieben eines Spreizhalters 30′ von einem elektromagnetischen Halter 61 zu vermeiden, ist die Anlagefläche 71 der Spreizhalter nach oben durch einen Anschlagvorsprung 74 begrenzt.

## Ansprüche

1. Verfahren zur zerstörungsfreien Prüfung von Fahrzeugreifen mittels der holografischen Interferometrie, mit einem Laser zum Beleuchten des in einer Unterdruckkammer angeordneten, unterschiedlichen Drücken aussetzbaren und offengehaltenen Fahrzeugreifens, dadurch gekennzeichnet, daß die Reifenoberfläche (Innenseite 11.1) bei verschiedener Druckbelastung jeweils nur kurzzeitig mittels eines energiereichen Laserimpulses beleuchtet wird.

2. Verfahren nach Anspruch 1, dadurch gekennzeichnet, daß die erzielten Interferogramme mittels einer Thermoplastkamera festgehalten werden.

3. Verfahren nach Anspruch 1, dadurch gekennzeichnet, daß anstelle der holografischen Interferogramme Shearogramme erzeugt werden.

4. Einrichtung zur serienmäßigen Durchführung des Prüfverfahrens nach einem der Ansprüche 1 bis 3, mit einem an einen Unterdruckerzeuger anschließbaren Unterdruckbehälter mit einer Vorrichtung zur Einzeleinbringung der zu prüfenden Fahrzeugreifen, in welchem Einrichtungen zur Laserstrahlführung und eine Aufzeichnungsvorrichtung für die erzielten Interferogramme angeordnet sind, dadurch gekennzeichnet, daß am oder im Unterdruckbehälter (13) ein Impulslaser (45) und als Aufzeichnungsvorrichtung eine Thermoplastkamera (53) angeordnet sind und der Unterdruckbehälter (13) eine (V) von mehreren, durch eine schrittweise bewegte endlose Reifen-Transportstrecke miteinander verbundenen Behandlungsstationen (I - IV) ist, welche die zu prüfenden Fahrzeug reifen (11) mittels Spreizhaltern (30; 37/38) offengehalten durchlaufen.

5. Einrichtung nach Anspruch 4, dadurch gekennzeichnet, daß auf der Reifen-Transportstrecke bewegliche Plattformen (10, 10a) zur Einzelauflage der Fahrzeugreifen (11) befördert werden.

6. Einrichtung nach Anspruch 4 oder 5, dadurch gekennzeichnet, daß eine zusätzliche, in der Reifen-Transportstrecke vor dem Unterdruckbehälter (13) angeordnete Behandlungsstation (IV) eine Sprüheinrichtung (32) zum Bilden einer Reflexionsschicht auf der Fahrzeugreifen-Innenseite (11.1) aufweist.

7. Einrichtung nach einem der Ansprüche 4 bis 6, dadurch gekennzeichnet, daß sie mindestens eine Greif- und Spreizvorrichtung (16) zum Aufspreizen der Fahrzeugreifen (11) und Einsetzen gesonderter Spreizhalter (30) an einer ersten Behandlungsstation (I oder II) und zur Entnahme der gesonderten Spreizhalter (30) an einer letzten Behandlungsstation der Reifen-Transportstrecke (III oder II) aufweist.

8. Einrichtung nach Anspruch 7, dadurch gekennzeichnet, daß die Greif- und Spreizvorrichtung (16) einen auf einer Laufschiene beweglichen Wagen (17) aufweist, an welchem ein Rahmen (18) absenkbar angeordnet ist, der mit einem Reifen-Tastfühler (39) und mehreren Betätigungszylindern (19, 21, 25, 28) als Verstellorganen für Reifen-Spannorgane (20/24) und Organe (27, 29) zum Einsetzen und Halten der gesonderten Spreizhalter (16) versehen ist.

9. Einrichtung nach einem der Ansprüche 4 bis 6, dadurch gekennzeichnet, daß jede Plattform (10a) mit mindestens einem eigenen, mit einer Antriebseinrichtung (35/36) verbundenen Spreizhalter (37 38) zum Offenhalten des aufgelegten Fahrzeugreifens (11) versehen ist (Fig. 5, 6).

10. Einrichtung nach einem der Ansprüche 4 bis 9, dadurch gekennzeichnet, daß die endlose Reifen-Transportstrecke unter dem Unterdruckbehälter (13) hindurch und oben über den Unterdruckbehälter (13) hinweg zurückgeführt ist und daß die Einzelbeschickung des Unterdruckbehälters (13) mit den offengehaltenen Fahrzeugreifen (11) über eine obere verschließbare Öffnung (41) des Unterdruckbehälters (13) erfolgt.

11. Einrichtung nach Anspruch 4, dadurch gekennzeichnet, daß zur Laserstrahlführung im Unterdruckbehälter (13) Lichtleitkabel vorgesehen sind.

12. Einrichtung nach Anspruch 11, dadurch gekennzeichnet, daß die Laser-Objektimpulse aus einem im Innern der Fahrzeugreifen (11) ringförmig geführten Lichtleiter auf die Reifeninnenseite (11.1) ausgeleitet werden.

13. Einrichtung nach Anspruch 4, dadurch gekennzeichnet, daß die Interferogramme oder Shearogramme, die im Innern des Unterdruckbehälters (13) sichtbar gemacht werden, mittels einer schwenkbaren und auf unterschiedliche Brennweiten einstellbaren Videokamera (56) erfaßbar und auf einem außerhalb des Unterdruckbehälters (13) angeordneten Monitor darstellbar sind.

14. Einrichtung nach Anspruch 7 oder 8, dadurch gekennzeichnet, daß die Greif- und Spreizvorrichtung (16') neben Betätigungszylindern zum Verstellen und Spreizen von Reifen-Spannorganen (20') elektromagnetische Halter (61) für die gesonderten Spreizhalter (30') aufweist.

15. Einrichtung nach Anspruch 14, dadurch gekennzeichnet, daß die gesonderten Spreizhalter (30') eine zur Fahrzeugreifenachse (59) parallele Anlagefläche (71) aufweisen, die nach oben durch einen Anschlagvorsprung (74) begrenzt ist und mit welcher sie - bei abgeschalteten oder nur teilerregten Elektromagneten (70) relativverschiebbar - gegen eine glatte Haltefläche (69) der elektromagnetischen Halter (61) anlegbar sind.

16. Einrichtung nach Anspruch 14 oder 15, dadurch gekennzeichnet, daß die elektromagnetischen Halter (61) jeweils neben einem zum Aufspreizen eines Fahrzeugreifens (11) dienenden Reifen-Spannorgan (20') eigenverstellbar angeordnet sind.

*Fig. 1*

Fig.2

Fig.3a

Fig.3b

Fig.3c

**Fig.3d**

**Fig.4a**

**Fig.4b**

10α

34

33

$\overline{VI}$

$\overline{VI}$

*Fig.5*

38  34    36    11 (11α)

10α

35    37    33    35

*Fig.6*

Fig.7

*Fig. 8*

60

20'

X          X

61          61

20'

61

*Fig.9*

*Fig. 10*

30'

*Fig. 11a*

71

74

11

70

30'

61

69

68

70

73

71

*Fig. 11*

68

61

70

70

*Fig. 12*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 225 238 (H. ROTTENKOLBER)<br>* Ingesamt *<br>--- | 1,2,4-10,13 | G 01 M 17/02<br>G 01 B 9/021 |
| Y | EP-A-0 169 143 (SOCIETE NATIONALE INDUSTRIELLE AEROSPATIALE)<br>* Zusammenfassung; Seite 4, Zeilen 10-25; Seite 5, Zeilen 24-26 *<br>--- | 1,2,13 | |
| Y | DE-A-3 307 798 (BUDAPESTI MÜSZAKI EGYETEM)<br>* Zusammenfassung *<br>--- | 1,2,13 | |
| Y | DE-A-2 852 188 (COLLMANN GmbH & CO. SPEZIALMASCHINENBAU KG)<br>* Insgesamt *<br>--- | 4-10 | |
| A | WO-A-8 401 998 (INDUSTRIAL HOLOGRAPHICS, INC.)<br>* Zusammenfassung; Seiten 8,9 *<br>----- | 1,3,13 | |

| RECHERCHIERTE SACHGEBIETE (Int. Cl.4) |
|---|
| G 01 M 17<br>G 01 B 9 |

Der vorliegende Recherchenbericht wurde für alle Patentansprüche erstellt

| Recherchenort | Abschlußdatum der Recherche | Prüfer |
|---|---|---|
| DEN HAAG | 08-09-1988 | VAN ASSCHE P.O. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................................
& : Mitglied der gleichen Patentfamilie, übereinstimmendes Dokument

EPO FORM 1503 03.82 (P0403)